# EUROPEAN PATENT APPLICATION

(11) **EP 3 563 736 A1**
(43) Date of publication of application: **06.11.2019**
(21) Application number: 19386026.9
(22) Date of filing: 19.04.2019
(51) Int. Cl.: A47J 43/044, A47J 19/00, A47J 36/06, A47J 43/046

(54) **MULTI-CHOPPER WITH A SPOUT FOR ADDING LIQUIDS DURING OPERATION**

(30) Priority: 03.05.2018 GR 20180100180
(71) Applicant: Sokratis D. Konstantinoy Kai Yios A.E. Emboria Biomixania Yalikon Kai Eidon Oikiaris Xrisis kai, 54110 Kalaxori, Thessalonikis (GR)
(72) Inventor: Sokratis D. Konstantinoy Kai Yios A.E. Emboria Biomixania Yalikon Kai Eidon Oikiaris Xrisis kai, 54110 Kalaxori, Thessalonikis (GR)
(74) Representative: Theodoropoulos, Konstantinos

(57) **Abstract**

A multi-chopper which consists of the base/motor (2) with a 2-speed switch (I) ,the lid (4) with the liquid and solids spout (3), the lid (5) that fits onto the bowl (7) and the system of the 3 stainless steel blades (6) placed inside the bowl (7), as illustrated in Figure 1. As shown in Figure 2, from the spout (3), we can add liquids (6) when the base/motor (2) is in the position locked 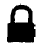 (5), without stopping the function of the multi-chopper.

This function is the advantage of the multi-chopper as it allows the addition of liquids from the spout (3) without stopping its function.

## Description

The invention relates to a multi-chopper with a spout for adding liquid and solid materials.

There are several multi-choppers used for chopping, pulping, mixing, etc. of vegetables, nuts and other foods. Their use is very specific. We place the ingredients in the bowl; we close the lid and push the switch. If we need to add liquid or solid materials, we open the lid, add the materials, put the lid on the bowl and press the switch to restart. This results in stopping the cutting, mixing, pulping of materials intermittently , by dirtying the surface used due to the lid opening and there is the case of the liquids overflow from the bowl.

The advantage of the invention is that during the time we operate the multi-chopper we can add liquids through the spout, without stopping its function. In this way, we do not stop the chopping function. We do not dirt with the lid and we avoid the overflow as we can control the liquids we fill. From the same spout, we can add solid materials without opening the lid. In this case,the multi-chopper does not function. After adding the solids from the spout, we place the base/motor at the operating point. Additionally, we can serve directly without opening the lid.

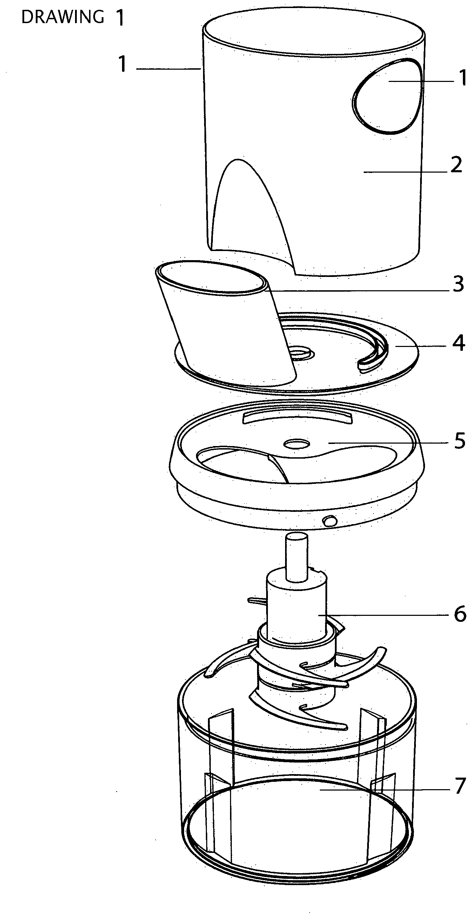

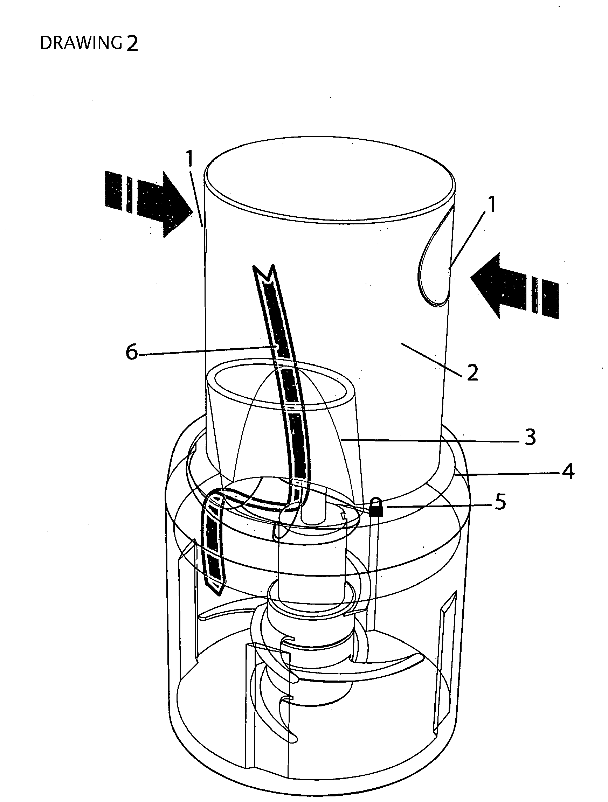

Figure 1 shows the parts of the multi-chopper in details. Figure 2 shows and reports the novelty of its function. As shown in Figure 1, the multi-chopper comprises a bowl of a capacity of 500ml (7) and into the bowl; the three blades (6) are placed. The bowl (7) with the triple blades (6) closes with the lid (5), which is designed in such a way to fit on it the lid (4) with the spout (3). From the spout (3) we fill liquids while operating the multi-chopper and solid materials when it is out of operation without opening the lid. Also from the spout (3), we can serve directly after removing the base/motor (2). There is a two-speed switch (I) on the base/motor (2) at two opposite points. The power switch (I) can operate either by pressing both points at the same time or by pressing each one individually depending on the user's ease (left or right-handed).

Figure 2 illustrates schematically the novelty of the multi-chopper. The lock signal 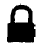 (5) is inscribed on the lid (4) of the spout (3) on which we mount the base/motor (2) and while pressing the switch (I), we add the liquids (6) without interrupting the function of the appliance.

## Claims

1. The multi-chopper is **characterized in that** it consists of the base/ motor (2), on which the two-speed function switch (I) is located the lid (4) with the spout of liquids and solids (3), the lid (5) that fits onto the bowl (7) and the stainless steel blade system (6) placed inside the bowl (7) .

2. The multi-chopper according to claim I, is **characterized by** the lid (4) with the liquid and solids spout (3) with the potentiality of adding liquid material during the multi-chopper's function.
